# EUROPÄISCHE PATENTSCHRIFT

(11) **EP 4 255 663 B1**
(45) Veröffentlichungstag und Bekanntmachung des Hinweises auf die Patenterteilung: **28.08.2024**
(21) Anmeldenummer: 22738638.0
(22) Anmeldetag: 29.06.2022
(51) Int. Cl.: B23K 9/29, B23K 9/32, B23K 37/00, G05D 21/02, B23K 9/173

(54) **SCHWEISSKOMPONENTEN-KÜHLSYSTEM MIT EINER EINRICHTUNG ZUR DEIONISIERUNG DER KÜHLFLÜSSIGKEIT, UND SCHWEISSKOMPONENTE MIT EINEM SOLCHEN SCHWEISSKOMPONENTEN-KÜHLSYSTEM**
WELDING COMPONENT COOLING SYSTEM WITH A DEVICE FOR DEIONISING THE COOLING LIQUID, AND WELDING COMPONENT COMPRISING SUCH A WELDING COMPONENT COOLING SYSTEM
SYSTÈME DE REFROIDISSEMENT DE COMPOSANTS DE SOUDAGE AVEC UN DISPOSITIF DE DÉIONISATION DU LIQUIDE DE REFROIDISSEMENT, ET COMPOSANT DE SOUDAGE DOTÉ D'UN TEL SYSTÈME DE REFROIDISSEMENT DE COMPOSANTS DE SOUDAGE

(30) Priorität: 30.06.2021 EP 21182634
(43) Veröffentlichungstag der Anmeldung: 11.10.2023
(73) Patentinhaber: FRONIUS INTERNATIONAL GmbH, 4643 Pettenbach (AT)
(72) Erfinder: FINK, Reinhold, 4643 Pettenbach (AT); LICHT, Sebastian, 4643 Pettenbach (AT); LEONHARTSBERGER, Andreas, 4643 Pettenbach (AT); BRANDLMAYR, Peter, 4643 Pettenbach (AT)
(74) Vertreter: SONN Patentanwälte GmbH & Co KG
(86) Internationale Anmeldenummer: PCT/EP2022/067824
(87) Internationale Veröffentlichungsnummer: WO 2023/275107

(56) Entgegenhaltungen:
- EP-A1- 3 501 719
- JP-A- S5 917 617
- US-A- 4 405 853
- US-A- 4 560 856
- US-A1- 2021 078 115

## Beschreibung

Die Erfindung betrifft ein Schweißkomponenten-Kühlsystem zur Kühlung einer Schweißkomponente, insbesondere eines Schweißbrenners, mit zumindest einem Behälter für Kühlflüssigkeit, einem Kühlkreislauf mit entsprechenden Kühlleitungen, zumindest einer im Kühlkreislauf angeordneten Pumpe zur Förderung der Kühlflüssigkeit durch die Kühlleitungen im Kühlkreislauf, und zumindest einem in einer Kühlleitung angeordneten Wärmetauscher, wobei im Kühlkreislauf eine Einrichtung zur Deionisierung der Kühlflüssigkeit vorgesehen ist, siehe Anspruch 1.

Weiters betrifft die Erfindung eine Schweißkomponente, insbesondere einen Schweißbrenner, siehe Anspruch 8, mit einem oben genannten Schweißkomponenten-Kühlsystem.

Die vorliegende Erfindung ist auf Schweißkomponenten bzw. deren Kühlung gerichtet, insbesondere auf Schutzgasschweißkomponenten. Flüssigkeitskühlsysteme für Schweißvorrichtungen bestehen üblicherweise aus einer Pumpe, einer Kühlflüssigkeit, einer Kühlleitung, den zu kühlenden Schweißkomponenten, einem Behälter für die Kühlflüssigkeit, einem Wärmetauscher und optional einem Filter, einem Durchflusswächter und einer Einrichtung zur Messung der Temperatur der Kühlflüssigkeit. Die verwendeten Kühlflüssigkeiten basieren meist auf Wasser mit verschiedenen beigemengten Zusätzen. Derartige Kühlflüssigkeiten weisen in der Regel einen elektrischen Leitwert von 80-120 pS/m auf.

Die Kühlleitungen und Kühlkanäle des Kühlkreislaufs weisen in der Regel unterschiedliche Materialien auf. Im Falle von elektrisch leitfähigen Materialien wie beispielsweise Metallen und/oder Metalllegierungen zeigen unterschiedliche Materialien unterschiedliche Standardpotentiale der elektrochemischen Spannungsreihe. Ferner können einzelne oder auch mehrere Bauteile im Kühlkreislauf gezielt bzw. ungezielt mit einer Spannung beaufschlagt werden und so auf unterschiedlichen elektrischen Potentialen (Kontaktrohrpfad/Gasdüsenpfad) liegen. Die resultierende Spannung zwischen Bestandteilen einer Schweißkomponente aus elektrisch leitfähigen Materialien kann zu einem elektrochemischen Stromfluss über die Kühlflüssigkeit führen. Des Weiteren können Konzentrationsgradienten von Ionen in der Kühlflüssigkeit auftreten, welche ebenfalls den Aufbau eines elektrochemischen Elements begünstigen. In der Folge resultiert ein sukzessiver Abbau des Bauteiles am Plus-Potential (Opferanode). Die Geschwindigkeit des Abbaus ist dabei unter anderem proportional zur Leitfähigkeit der Kühlflüssigkeit. Der elektrochemische Stromfluss baut dabei nicht nur die Anode ab und zerstört dadurch die jeweilige Schweißkomponente, sondern der dabei entstehende Anodenschlamm kann zudem die Kühlleitung verstopfen und somit die Kühlwirkung reduzieren oder sogar unterbinden. Da sich durch den elektrochemischen Oxidationsprozess in der Kühlflüssigkeit immer mehr Ionen ansammeln, steigt der Leitwert der Kühlflüssigkeit stetig an bzw. kann in eine Sättigung übergehen und der Prozess kann sich gegebenenfalls fortlaufend perpetuieren. Des Weiteren besitzen die abgelösten Ionen eine stark chemisch katalytische Wirkung, welche einen Zerfall der Kühlflüssigkeit in schwerlösliche, und somit verstopfende Substanzen begünstigt.

Zur Verringerung der elektrischen Leitfähigkeit einer Kühlflüssigkeit ist es in verschiedenen technischen Gebieten üblich, Deionisierer einzusetzen, welche die Ionen aus der Kühlflüssigkeit mit Hilfe eines Deionisierharzes entfernen. Beispielsweise beschreibt die EP 0 072 407 A2 ein Plasmaspritzgerät mit einem Deionisierer im Kühlsystem, wodurch die Standzeit der Plasmadüse verlängert werden kann.

Der Einsatz einer Ionenaustauschharzeinheit zur Deionisierung der Kühlflüssigkeit in einer Brennstoffzelle wird beispielsweise in der EP 2 025 029 B1 beschrieben.

Die US 4,560,856 A (Basis für den Oberbegriff des anspruchs 1) beschreibt eine Laserbearbeitungsmaschine mit einem Flüssigkeitskühlsystem unter Einsatz einer Einrichtung zur Deionisierung der Kühlflüssigkeit. Ein ähnliches Flüssigkeitskühlsystem bei einem Plasmaspritzgerät ist aus der US 4,405,853 A bekannt geworden.

Aus der JP S59 17617 A ist ein Flüssigkeitskühlsystem bekannt geworden, bei dem der pH-Wert und die Temperatur der Kühlflüssigkeit gemessen wird und in Abhängigkeit der gemessenen Werte eine Einrichtung zur Deionisierung der Kühlflüssigkeit entsprechend angesteuert wird.

Aus der EP 3 501 719 A1 ist eine Schweißkomponente mit einem Flüssigkeitskühlsystem bekannt geworden. Eine Einrichtung zur Deionisierung der Kühlflüssigkeit wird nicht beschrieben.

In Kühlsystemen von Schweißanlagen ist bislang der Einsatz von Einrichtungen zur Deionisierung der Kühlflüssigkeit nicht bekannt geworden.

Die Aufgabe besteht daher in der Schaffung eines Schweißkomponenten-Kühlsystems sowie einer Schweißkomponente mit einem solchen Schweißkomponenten-Kühlsystem, durch welche eine optimale Kühlung der Schweißkomponente über möglichst lange Zeiträume gewährleistet wird und eine möglichst hohe Lebensdauer der Bestandteile der Schweißkomponente erzielt werden kann. Die verwendete Kühlflüssigkeit soll möglichst lange verwendet werden können und eine Verstopfung des Kühlkreislaufes verhindert werden. Nachteile bekannter Schweißkomponenten-Kühlsysteme sollen verringert oder sogar eliminiert werden.

Gelöst wird die erfindungsgemäße Aufgabe durch ein oben genanntes Schweißkomponenten-Kühlsystem, bei dem zumindest ein Sensor zur Messung des Leitwerts und zumindest ein Temperatursensor zur Messung der Temperatur der Kühlflüssigkeit im Kühlkreislauf sowie zumindest ein Sensor zur Messung des Durchflusses der Kühlflüssigkeit im Kühlkreislauf angeordnet und jeweils mit einer Steuereinrichtung verbunden ist, wobei die Steuereinrichtung mit einer mit der Schweißkomponente verbundenen Schweißstromquelle verbindbar ist. Durch die im Kühlkreislauf angeordnete Deionisiereinrichtung wird gewährleistet, dass die Leitfähigkeit der Kühlflüssigkeit gering bleibt, sodass die oben beschriebenen Nachteile der rascheren Zerstörung von metallischen Bestandteilen der jeweiligen Schweißkomponente durch den elektrochemischen Oxidationsprozess und der dadurch verringerten Standzeit der Schweißkomponente sowie der Verschmutzung der Kühlflüssigkeit und einer allfälligen Blockierung des Kühlkreislaufes nicht oder nicht so rasch eintreten. Im Kühlkreislauf befindet sich also zumindest eine Deionisiereinrichtung, welche eine Entsalzung der Kühlflüssigkeit bewirkt. Durch die resultierende Reduktion des Leitwertes der Kühlflüssigkeit wird die elektrochemische Korrosion der metallischen Bestandteile verringert oder vorzugsweise ganz gestoppt und die Lebensdauer der Schweißkomponenten bzw. deren Bestandteile drastisch erhöht.

Durch den zumindest einen Sensor zur Messung des Leitwerts der Kühlflüssigkeit im Kühlkreislauf, kann der Zustand der Kühlflüssigkeit überprüft werden und es können bei bestimmten Leitwerten entsprechende Warnungen ausgegeben oder automatisch Regelungen vorgenommen werden. Bei Erreichung eines vorgegebenen Grenzwerts für die Leitfähigkeit kann dies beispielsweise ein Anzeichen für eine Sättigung des Mischbettharzes der Deionisiereinrichtung sein. Dementsprechend kann über eine Steuereinrichtung und eine Anzeige der Schweißer zu einem Wechsel des Mischbettharzes angeregt werden. Hierbei kann eine einfache Wechselmöglichkeit der Deionisiereinrichtung beispielsweise durch eine Schraubverbindung, eine Klickverbindung oder eine Bajonettverbindung vorgesehen sein. Anstelle einer eigenen dafür vorgesehenen Anzeige kann auch die Anzeige an der Schweißstromquelle oder an einer übergeordneten Steuereinrichtung verwendet werden, welche über entsprechende Verbindungsleitungen mit dem zumindest einen Leitwertsensor verbunden ist. Dabei sind sowohl drahtgebundene als auch drahtlose Verbindungen möglich. Beispielsweise können folgende Grenzwerte für den Leitwert der Kühlflüssigkeit definiert werden:

| | |
|---|---|
| > 50 µS | "roter Bereich" (hohes elektrochemisches Oxidationspotential - Wechseln der Deionisiereinrichtung bzw. des Mischbettharzes notwendig) |
| 25 bis 50 µS | "oranger Bereich" (mittleres elektrochemisches Oxidationspotential - Wartung der Deionisiereinrichtung planen) |
| 10 bis 25 µS | "gelber Bereich" (geringes elektrochemisches Oxidationspotential) |
| < 10 µ3 | "grüner Bereich" (kein nennenswertes elektrochemisches Oxidationspotential) |

Dabei ist zumindest ein Sensor zur Messung des Leitwerts der Kühlflüssigkeit vorzugsweise in einer rücklaufenden Kühlleitung des Kühlkreislaufes angeordnet. Dadurch, dass immer sichergestellt wird, dass die Kühlflüssigkeit einen sehr geringen Leitwert aufweist, wird die "isolierende" Wirkung der Kühlflüssigkeit gewährleistet. Dadurch sinkt die Gefahr, dass Bestandteile der Schweißkomponente, welche vom Schweißer berührt werden könnten, beispielsweise die Gasdüse auf einem gefährlich hohen Potential wie andere Bestandteile, beispielsweise das Kontaktrohr, liegen. Ebenso kann durch die "isolierende" oder sehr schlecht leitende Kühlflüssigkeit eine Ableitung der HF-Zündenergie auf andere Bauteile der Schweißkomponenten verhindert werden und sichergestellt werden, dass im Wesentlichen die gesamte Zündenergie an der Elektrode der Schweißkomponente ankommt und die Zündung des Lichtbogens bewirkt.

Weiters ist zumindest ein Sensor zur Messung des Durchflusses der Kühlflüssigkeit im Kühlkreislauf angeordnet, wodurch wichtige Informationen über die Strömung der Kühlflüssigkeit gewonnen werden können. Die gemessenen Durchflusswerte der Kühlflüssigkeit können einerseits zu Dokumentations- oder Überwachungszwecken verwendet werden oder auch zur Regelung bestimmter Vorgänge verwendet werden. Der oben erwähnte Sensor zur Messung der Leitfähigkeit der Kühlflüssigkeit kann in besonders bevorzugter Weise auch mit dem Sensor zur Messung des Durchflusses der Kühlflüssigkeit kombiniert werden und an einer oder auch an mehreren Stellen im Kühlkreislauf platziert werden. Derartige kombinierte Sensoren für beide Eigenschaften der Kühlflüssigkeit sind relativ kostengünstig und in geringer Baugröße erhältlich.

Über zumindest einen Temperatursensor wird die Temperatur der Kühlflüssigkeit im Kühlkreislauf erfasst. Über die Temperatur der Kühlflüssigkeit kann natürlich die Kühlwirkung gemessen und es können entsprechende Schritte gesetzt werden. Die gemessene Temperatur der Kühlflüssigkeit kann einerseits zu Dokumentations- oder Überwachungszwecken oder auch zur Regelung bestimmter Vorgänge herangezogen werden. Der oben erwähnte Sensor zur Messung der Leitfähigkeit der Kühlflüssigkeit und Sensor zur Messung des Durchflusses der Kühlflüssigkeit kann in besonders bevorzugter Weise auch mit dem Sensor zur Messung der Temperatur der Kühlflüssigkeit kombiniert werden und an einer oder auch an mehreren Stellen im Kühlkreislauf platziert werden. Derartige kombinierte Sensoren für alle genannten Eigenschaften sind relativ kostengünstig und in geringer Baugröße erhältlich.

Der zumindest eine Sensor zur Messung des Leitwerts, der zumindest eine Sensor zur Messung des Durchflusses und der zumindest eine Temperatursensor zur Messung der Temperatur der Kühlflüssigkeit oder ein entsprechender Kombinationssensor ist mit einer Steuereinrichtung verbunden. Die Steuereinrichtung, welche beispielsweise durch einen Mikroprozessor gebildet sein kann, verarbeitet die Daten entsprechend und leitet diese an die gewünschten übergeordneten Stellen weiter. Anstelle einer eigenen dafür vorgesehenen Steuereinrichtung kann natürlich auch eine beispielsweise in einer Schweißstromquelle ohnedies vorhandene Steuereinrichtung verwendet werden. Voraussetzung dafür ist nur eine entsprechende drahtgebundene oder drahtlose Verbindung der jeweiligen Sensoren mit dieser Steuereinrichtung und die Gewährleistung einer Versorgung der Sensoren mit elektrischer Energie. Die Steuereinrichtung ist vorzugsweise mit einer Anzeige verbunden, um dem Benutzer des Schweißkomponenten-Kühlsystems Betriebszustände optisch anzeigen zu können. Die Anzeige kann von einfachen Lichtquellen, insbesondere Leuchtdioden über einfache Displays bis hin zu komplexeren Touch-Screens, welche gleichzeitig eine Bedienfunktion ermöglichen, reichen. Über die Anzeige kann beispielsweise auch der jeweilige Zustand der Deionisiereinrichtung, der Leitwert, Durchfluss und/oder die Temperatur der Kühlflüssigkeit, etc. in unterschiedlichen Farben, Zahlenwerten oder auch in Form von Zeigern dargestellt werden. Im Falle der Überschreitung bestimmter Grenzwerte können neben optischen Warnungen natürlich auch akustische Signale über einen Lautsprecher oder dgl. abgegeben werden und bzw. oder an übergeordnete Zentralen weitergeleitet werden. Dadurch, dass die Steuereinrichtung mit einer mit der Schweißkomponente verbundenen Schweißstromquelle verbindbar ist, kann die Schweißstromquelle zur Anzeige oder Verarbeitung der relevanten Informationen herangezogen werden und es muss keine eigene Steuereinrichtung und allenfalls Anzeige bereitgestellt werden.

Zu den Schweißkomponenten zählt in erster Linie der Schweißbrenner, aber auch das Schlauchpaket, durch welches die Kühlflüssigkeit in entsprechenden Leitungen geführt wird, die Pumpe für die Förderung der Kühlflüssigkeit, etc. Durch das erfindungsgemäße Schweißkomponenten-Kühlsystem und die reduzierte Leitfähigkeit der Kühlflüssigkeit können für manche Schweißkomponenten oder deren Bestandteile Materialien verwendet werden, welche bei herkömmlichen Kühlflüssigkeiten ohne die gegenständliche Erfindung binnen kürzester Zeit zur Zerstörung führen würden. Der Aufwand und die Kosten für die Implementierung der Deionisiereinrichtung im Kühlkreislauf sind überschaubar und amortisieren sich durch die erzielte längere Lebensdauer der Schweißkomponenten relativ rasch.

Vorzugsweise ist die Deioisiereinrichtung durch einen Behälter mit darin angeordnetem Mischbettharz gebildet. Dies stellt eine einfache und kostengünstige Realisierungsmöglichkeit einer Einrichtung zur Deionisierung der Kühlflüssigkeit dar. Das sehr günstig erhältliche Mischbettharz wird in einem Behälter, der von der Kühlflüssigkeit durchströmt wird, angeordnet, wodurch es zu einer Entsalzung der Kühlflüssigkeit kommt. Das Harz bindet die freien Ionen in der Kühlflüssigkeit und reduziert damit den Leitwert der Kühlflüssigkeit je nach Menge und Platzierung. Beispielsweise sind Leitwerte der Kühlflüssigkeit in der Größenordnung von 1 - 50 pS/m erzielbar. Der durch das Mischbettharz gebildete Ionentauscher ist geeignet, (Metall-)Ionen "einzufangen" oder einzulagern und durch H+ bzw. OH- Ionen zu ersetzen, welche in weiterer Folge zu neutralem Wasser kombinieren. Geeignet als Mischbettharze sind insbesondere OH- und H+ Ionen aktivierte Harze, beispielsweise Purolite^{®} MB400, Universalmischbettharze oder selektive Mischbettharze, welche auch in beliebigem Verhältnis miteinander gemischt werden können und unterschiedliche Korngrößen aufweisen können. Eine Wiederaufbereitung der Mischbettharze ist nicht vorgesehen. Das Mischbettharz kann in einem flüssigkeitsdurchlässigen Beutel oder Behältnis ähnlich einem Teebeutel angeordnet sein.

Das im Behälter der Deionisiereinrichtung angeordnete Mischbettharz kann idealerweise aus einer Mischung von Kationenharz und Anionenharz, vorzugsweise 40% Kationensalz und 60% Anionensalz bestehen. Das Mischungsverhältnis zwischen Anionensalz und Kationensalz wird in der Regel derart gewählt, sodass die Standzeit des Mischbettharzes maximiert wird.

Die Deionisiereinrichtung kann in einer Kühlleitung innerhalb des Kühlkreislaufes angeordnet sein. Dadurch wird die Deionisiereinrichtung von der Kühlflüssigkeit durchflossen und diese dadurch deionisiert und deren Leitwert reduziert.

Alternativ dazu kann die Deionisiereinrichtung auch in einem Bypass zu einer Kühlleitung innerhalb des Kühlkreislaufes angeordnet sein. Dies hat gegenüber der oben beschriebenen Anordnung direkt im Kühlkreislauf den Vorteil, dass durch die Deionisiereinrichtung keine Erhöhung des Strömungswiderstands für die Kühlflüssigkeit im Kühlkreislauf bewirkt wird, die Leitfähigkeit der Kühlflüssigkeit aber dennoch entsprechend reduziert werden kann.

Gemäß einem Merkmal der Erfindung weist der Behälter mit dem Mischbettharz einen zentralen Einlasskanal und koaxial dazu außen einen Abflusskanal auf. Die Kühlflüssigkeit kann einerseits durch das Mischbettharz hindurchströmen und/oder andererseits lediglich die Oberfläche berührend am Mischbettharz vorbeiströmen. Dieser Aufbau gewährleistet eine optimale Wechselwirkung des im Behälter angeordneten Mischbettharzes mit der Kühlflüssigkeit bei gleichzeitig möglichst geringem Strömungswiderstand für die Kühlflüssigkeit.

Als Kühlflüssigkeit ist vorzugsweise Wasser mit Zusätzen, beispielsweise einem Frostschutzmittel, insbesondere Ethanol oder Propylenglykol oder Ethylenglykol oder allgemeine wasserlösliche Alkohole und bzw. oder allgemeine wasserlösliche Polyalkohole, und bzw. oder einem Korrosionsinhibitor, vorgesehen. Ferner können der Kühlflüssigkeit noch Algizide und bzw. oder Fungizide beigemengt sein.

Wenn im Kühlkreislauf zumindest ein Filter angeordnet ist, können Verunreinigungen in der Kühlflüssigkeit abgeschieden werden. Als Filter können beispielsweise Metallsiebe, Kunststoffsiebe, Papier- bzw. Naturfaserfilter, Filze, Vliese, offenporige Sintermaterialien, Schüttungen oder Kombinationen daraus eingesetzt werden. Sinkt der Durchfluss der Kühlflüssigkeit unter einen vorgegebenen Grenzwert, kann dies ein Anzeichen für einen höheren Verschmutzungsgrad des Filters sein und ein Tausch oder eine Reinigung des Filters notwendig werden.

Gelöst wird die erfindungsgemäße Aufgabe auch durch eine oben erwähnte Schweißkomponente, insbesondere einen Schweißbrenner, bei der ein oben beschriebenes Schweißkomponenten-Kühlsystem vorgesehen ist, dessen Kühlkreislauf mit dem Kühlkanal der Schweißkomponente verbunden ist bzw. wobei der Kühlkanal der Schweißkomponente Teil des Kühlkreislaufes des Schweißkomponenten-Kühlsystems ist. Durch den Einsatz des erfindungsgemäßen Kühlsystems wird gewährleistet, dass die Kühlflüssigkeit einen möglichst geringen Leitwert aufweist und dadurch die elektrochemische Oxidation vermieden oder reduziert wird. Zu den weiteren erzielbaren Vorteilen wird auf die obige Beschreibung des Schweißkomponenten-Kühlsystems verwiesen. Erfindungsgemäß können durch den niedrigen Leitwert der Kühlflüssigkeit unterschiedliche Materialen mit einer Differenz des elektrochemischen Potentials von größer als 0,7 V, in einer Schweißkomponente, insbesondere eines Schweißbrenners verwendet werden. Die Lebensdauer wird durch den geringen elektrochemischen Stromfluss, auf Grund der niedrigen Leitfähigkeit der Kühlflüssigkeit, nicht verringert.

Wie bereits oben erwähnt, ist durch die Erzielung der sehr niedrig leitfähigen Kühlflüssigkeit die Verwendung von Metallen und deren Kombinationen möglich, welche andernfalls zu einer raschen Zerstörung der Bestandteile führen würden. Während beispielsweise bei herkömmlichen Schweißkomponenten-Kühlsystemen, bei welchen die Kühlflüssigkeit relativ hohe elektrische Leitwerte aufweisen, Bestandteile aus elektrisch leitfähigen Materialien mit einem ähnlichen Standardpotential nach der elektrochemischen Spannungsreihe aufweisen, sind bei Verwendung des erfindungsgemäßen Schweißkomponenten-Kühlsystems auch Kombinationen von Materialien mit einem deutlich höheren Unterschied des Standardpotentials nach der elektrochemischen Spannungsreihe verwendbar. Beispielsweise war, unter Einhaltung der geforderten Standzeit, bei herkömmlichen wassergekühlten Schweißkomponenten nur die Kombination von Metallen mit maximal 0,58 V Unterschied im Standardpotential möglich, beispielsweise die Verwendung von Kupfer (Standardpotential +0,35 V) und Nickel (Standardpotential -0,23 V). Bei Einsatz des erfindungsgemäßen Schweißkomponenten-Kühlsystems hingegen ist beispielsweise unter Einhaltung der geforderten Standzeit, die Kombination von Metallen mit bis zu 2,46 V Unterschied im Standardpotential möglich. Hier kann beispielsweise Aluminium (Standardpotential -1,66V) mit Silber (Standardpotential +0,8V) kombiniert werden und dadurch eine wesentlich höhere Lebensdauer der Schweißkomponente, insbesondere des Schweißbrenners erzielt werden.

Gemäß einem weiteren Merkmal der Erfindung ist vorgesehen, dass die zumindest zwei Bestandteile der Schweißkomponente mit unterschiedlichem elektrochemischen Standardpotential, derart angeordnet sind, dass die minimale Weglänge bzw. die Flüssigkeitssäulenlänge zwischen den zumindest zwei Bestandteilen durch den Kühlkanal unter 12 mm, vorzugsweise unter 5 mm, beträgt. Bei Schweißkomponenten mit herkömmlichen Kühlsystemen mit Leitwerten der Kühlflüssigkeit zwischen 50 und 250 µS besteht die Anforderung beispielsweise darin, die Flüssigkeitssäulenlänge > 12 mm auszuführen, um eine noch akzeptable elektrochemische Abtragsrate zu gewährleisten. Beim Einsatz des erfindungsgemäßen Kühlsystems mit Leitwerten der Kühlflüssigkeit unter 10 µS genügen hingegen Flüssigkeitssäulenlängen < 5 mm zur Erzielung einer noch akzeptablen elektrochemischen Abtragsrate. Dadurch können manche Schweißkomponenten auch kompakter bzw. leichter ausgeführt werden.

Die vorliegende Erfindung wird anhand der beigefügten Zeichnungen, auf die sie nicht beschränkt sein soll, näher erläutert. Darin zeigen:
- Fig. 1: ein schematisches Blockschaltbild einer Ausführungsform eines Schweißkomponenten-Kühlsystems;
- Fig. 2: ein schematisches Blockschaltbild einer Ausführungsform eines erfindungsgemäßen Schweißkomponenten-Kühlsystems;
- Fig. 3a: eine erste Ausführungsform einer Einrichtung zur Deionisierung der Kühlflüssigkeit in Form eines Behälters mit darin angeordnetem Mischbettharz;
- Fig. 3b: eine zweite Ausführungsform einer Einrichtung zur Deionisierung der Kühlflüssigkeit in Form eines Behälters mit darin angeordnetem Mischbettharz;
- Fig. 3c: eine dritte Ausführungsform einer Einrichtung zur Deionisierung der Kühlflüssigkeit in Form eines Behälters mit darin angeordnetem Mischbettharz;
- Fig. 3d: eine vierte Ausführungsform einer Einrichtung zur Deionisierung der Kühlflüssigkeit in Form eines Behälters mit darin angeordnetem Mischbettharz;
- Fig. 4: eine schematisches Schnittbild durch einen Schweißbrenner zur Verbindung mit einem erfindungsgemäßen Schweißkomponenten-Kühlsystem; und
- Fig. 5: eine Detailansicht eines Schweißbrenners im Schnittbild A-A zur Veranschaulichung der Bestandteile im Bereich des Kühlkanals.

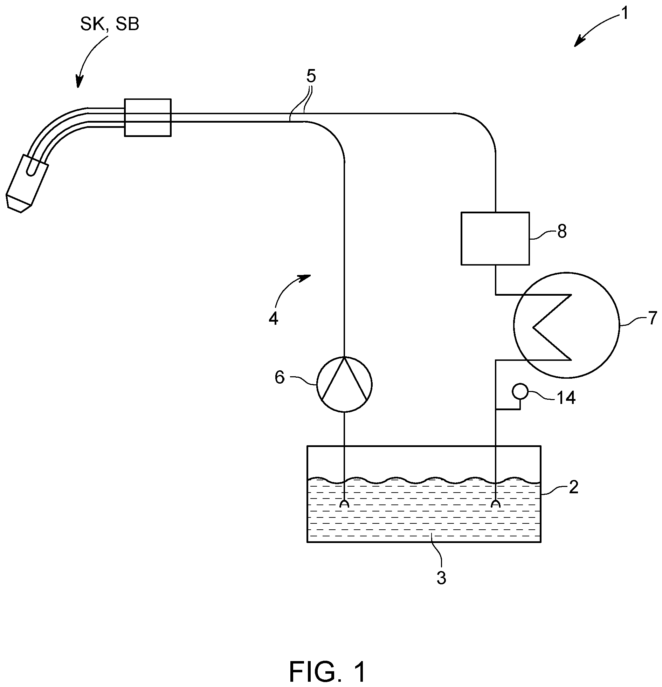

In Fig. 1 ist ein schematisches Blockschaltbild einer Ausführungsform eines Schweißkomponenten-Kühlsystems 1 dargestellt. Das Schweißkomponenten-Kühlsystem 1 zur Kühlung einer Schweißkomponente SK, beispielsweise eines Schweißbrenners SB, beinhaltet zumindest einen Behälter 2 für die Kühlflüssigkeit 3. Die Kühlflüssigkeit 3 ist insbesondere durch Wasser mit entsprechenden Zusätzen gebildet, welche vom Behälter 2 in einem Kühlkreislauf 4 geführt wird. Der Kühlkreislauf 4 ist durch entsprechende Kühlleitungen 5 gebildet. Zumindest eine im Kühlkreislauf 4 angeordnete Pumpe 6 fördert die Kühlflüssigkeit 3 durch die Kühlleitungen 5 im Kühlkreislauf 4. Innerhalb des Kühlkreislaufes 4 ist in einer Kühlleitung 5 zumindest ein Wärmetauscher 7 angeordnet, über den die Wärme an die Umgebung abgeführt wird. Der Wärmetauscher 7 kann beispielsweise als Flüssigkeits-/Luft-Wärmetauscher oder auch Flüssigkeits-/Flüssigkeits-Wärmetauscher ausgeführt werden. Die Abwärme kann gegebenenfalls weiterverwendet werden, beispielsweise zum Heizen der Schweißhalle. Um zu verhindern, dass der elektrische Leitwert S der Kühlflüssigkeit 3 zu hoch wird, ist im Kühlkreislauf 4 eine Einrichtung 8 zur Deionisierung der Kühlflüssigkeit 3 vorgesehen. Im dargestellten Ausführungsbeispiel ist die Deionisierungseinrichtung 8 in der rücklaufenden Kühlleitung 5 des Kühlkreislaufes 4 angeordnet. Sie kann aber auch an einer anderen Stelle innerhalb des Kühlkreislaufes 5 platziert werden.

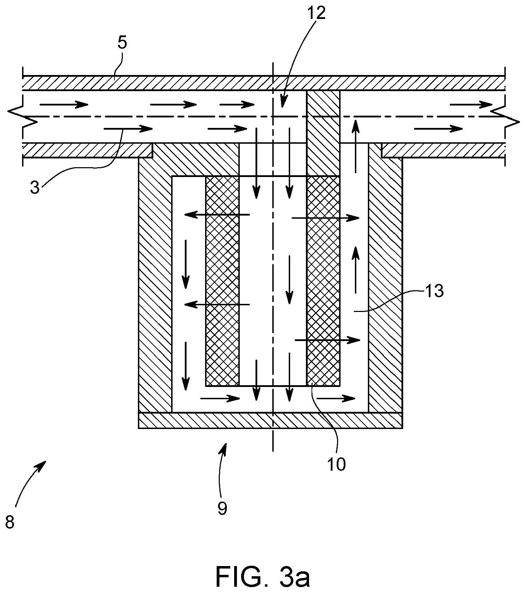

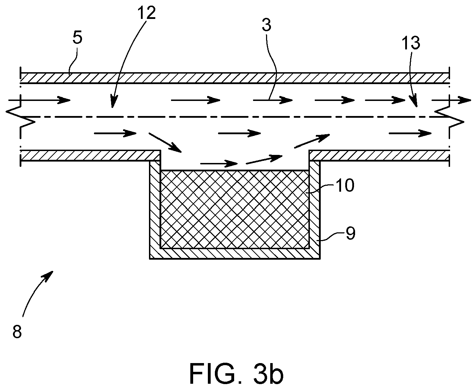

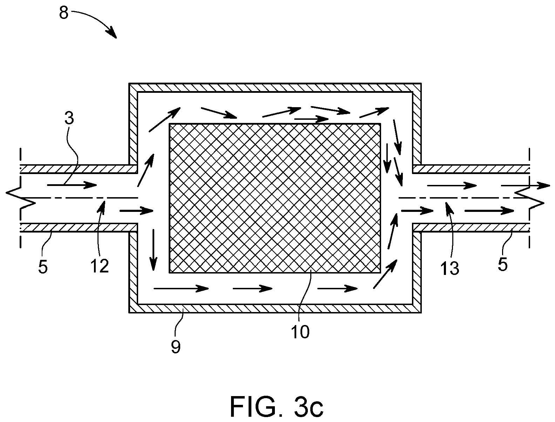

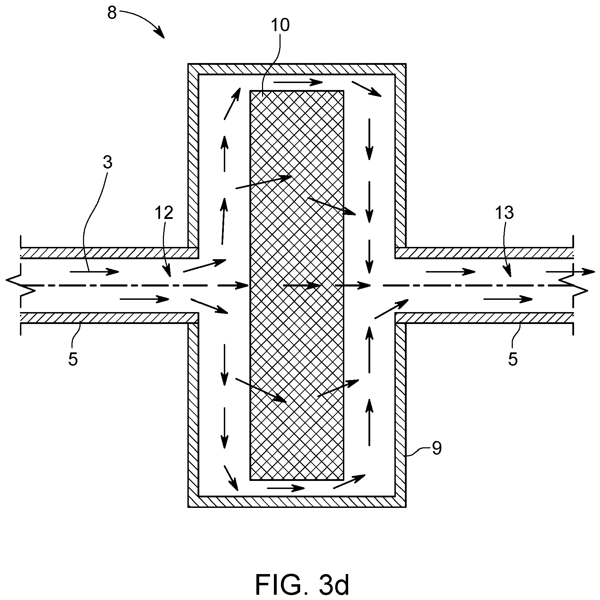

Die Deionisiereinrichtung 8, welche beispielsweise durch einen Behälter 9 mit darin angeordnetem Mischbettharz 10 gebildet sein kann (siehe Fig. 3), sorgt dafür, dass die Kühlflüssigkeit 3 einen sehr niedrigen elektrischen Leitwert S aufweist, wodurch sich negative Effekte aufgrund stattfindender elektrochemischer Oxidationen in den Schweißkomponenten SK weniger stark auswirken und in der Folge die Schweißkomponenten SK eine höhere Lebensdauer besitzen.

Vorteilhafterweise ist zumindest ein Sensor 14 zur Messung des Leitwerts S der Kühlflüssigkeit 3 im Kühlkreislauf 4, insbesondere in einer rücklaufenden Kühlleitung 5 des Kühlkreislaufes 4 angeordnet. Über die erhaltenen Messwerte des Sensors 14 zur Messung des Leitwerts S der Kühlflüssigkeit 3 kann der Zustand der Kühlflüssigkeit 3 überwacht und die Wirkung der Deionisierung durch die Deionisiereinrichtung 8 gemessen werden.

Anstelle eines Sensors 14 zur Messung des Leitwerts S der Kühlflüssigkeit 3 im Kühlkreislauf kann auch ein Sensor zur Messung des Widerstands der Schweißkomponente SK gegenüber Masse, beispielsweise des Widerstands des Kontaktrohres gegenüber Masse, vorgesehen sein und in Abhängigkeit des verwendeten Schweißbrenners auf den Leitwert S der Kühlflüssigkeit 3 rückgeschlossen werden.

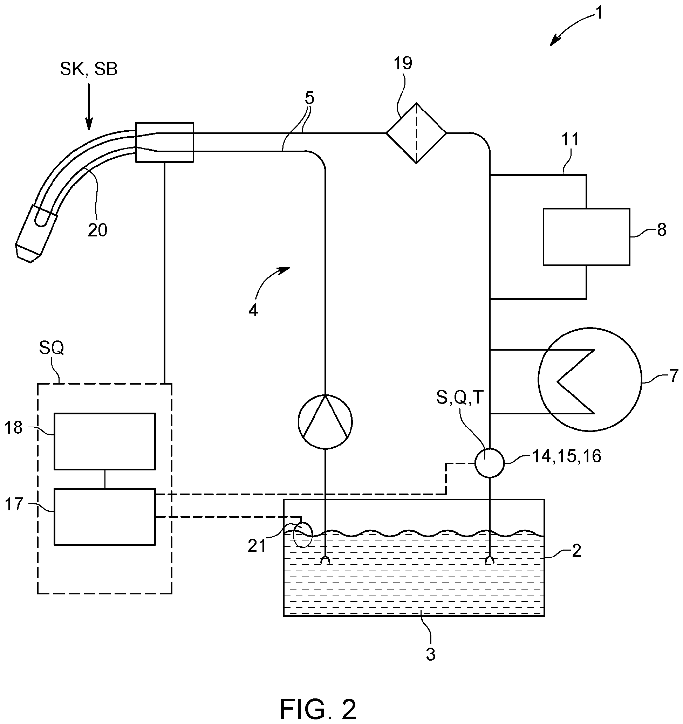

Fig. 2 zeigt ein schematisches Blockschaltbild einer Ausführungsform eines erfindungsgemäßen Schweißkomponenten-Kühlsystems 1. Im Unterschied zur Ausführungsform gemäß Fig.1 ist hier die Einrichtung 8 zur Deionisierung der Kühlflüssigkeit 3 nicht in einer Kühlleitung 5 des Kühlkreislaufes 4 angeordnet, sondern in einem Bypass 11 zu einer Kühlleitung 5 innerhalb des Kühlkreislaufes 4. Dadurch wird der Strömungswiderstand der Kühlflüssigkeit 3 innerhalb des Kühlkreislaufes 5 durch die Deionisiereinrichtung 8 nicht negativ beeinflusst. Darüber hinaus ist zusätzlich zu dem Sensor 14 zur Messung der Leitfähigkeit S der Kühlflüssigkeit 3 zumindest ein Sensor 15 zur Messung des Durchflusses Q der Kühlflüssigkeit 3 und zumindest ein Temperatursensor 16 zur Messung der Temperatur T der Kühlflüssigkeit 3 im Kühlkreislauf 4 angeordnet. Im dargestellten Ausführungsbeispiel sind die Sensoren 14, 15, 16 an derselben Stelle innerhalb des Kühlkreislaufes 4 angeordnet und vorzugsweise durch einen kombinierten Sensor gebildet.

Der zumindest eine Sensor 14 zur Messung des Leitwerts S der Kühlflüssigkeit 3, der zumindest eine Sensor 15 zur Messung des Durchflusses Q der Kühlflüssigkeit 3, und bzw. oder der zumindest eine Temperatursensor 16 zur Messung der Temperatur T der Kühlflüssigkeit 3 sowie ein allfälliger Sensor 21 zur Messung des Pegels der Kühlflüssigkeit 3 im Behälter 2 sind vorzugsweise mit einer Steuereinrichtung 17 verbunden, welche für die Verarbeitung und Weiterleitung der Messwerte sorgt. An einer mit der Steuereinrichtung 17 verbundenen Anzeige 18 können die Messwerte der Sensoren 14, 15, 16, 21 angezeigt und der Zustand der Deionisiereinrichtung 8 dargestellt werden. Die Steuereinrichtung 17 sowie die Anzeige 18 können auch in einer Schweißstromquelle SQ angeordnet sein. Die Verbindungen zwischen der Steuereinrichtung 17 und den Sensoren 14, 15, 16, 21 können leitungsgebunden oder auch drahtlos ausgeführt sein.

Im Kühlkreislauf 4 kann auch zumindest ein Filter 19 zum Filtrieren der Kühlflüssigkeit 3 angeordnet sein.

In Fig. 3a ist eine Ausführungsform einer Einrichtung zur Deionisierung 8 der Kühlflüssigkeit 3 in Form eines Behälters 9 mit darin angeordnetem Mischbettharz 10 dargestellt. Der mit den Kühlleitungen 5 des Kühlkreislaufes 4 entsprechend verbundene Behälter 9 mit dem Mischbettharz 10 weist einen zentralen Einlasskanal 12 und koaxial dazu außen einen Abflusskanal 13 auf. Die Kühlflüssigkeit 3 kann einerseits durch das Mischbettharz 10 hindurchströmen und/oder andererseits lediglich die Oberfläche berührend am Mischbettharz 10 vorbeiströmen. Das Mischbettharz 10 kann in einfacher Weise, vorzugsweise von der Unterseite des Behälters 9 her getauscht werden. Das Mischbettharz 10 besteht vorzugsweise aus einer Mischung von Kationenharz und Anionenharz, insbesondere 40% Kationensalz und 60% Anionensalz.

Die Fig. 3b und 3c zeigen zwei weitere mögliche Ausführungsformen der Deionisiereinrichtung 8, bei welchen die Kühlflüssigkeit 3 im Behälter 9 jeweils die Oberfläche berührend am Mischbettharz 10 vorbeiströmt.

Die Fig. 3d zeigt eine weitere mögliche Ausführungsform der Deionisiereinrichtung 8, wobei die Kühlflüssigkeit 3 einerseits durch das Mischbettharz 10 im Behälter 9 hindurchströmen und bzw. oder andererseits lediglich die Oberfläche berührend am Mischbettharz 10 vorbeiströmen kann.

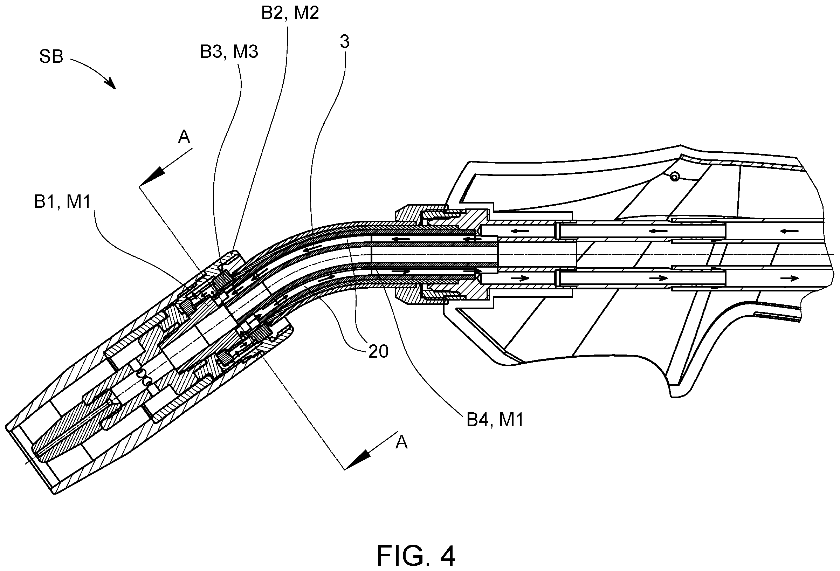

Fig. 4 zeigt ein schematisches Schnittbild durch einen Schweißbrenner SB zur Verbindung mit einem erfindungsgemäßen Schweißkomponenten-Kühlsystem 1. Der Schweißbrenner SB, weist verschiedene Bestandteile B1, B2, B3, B4, wie zum Beispiel die Düsenstockaufnahme als Bestandteil B1, die Gasdüsenaufnahme als Bestandteil B2, die Kühlhülse als Bestandteil B3, das Innenrohr des Rohrbogens als Bestandteil B4, etc. auf. Im dargestellten Ausführungsbeispiel bestehen die Bestandteile B1 und B4 aus einem elektrisch leitfähigen Material M1 und der Bestandteil B3 aus einem anderen elektrisch leitfähigen Material M2. Bestandteil B3 besteht aus elektrisch isolierendem Material M3. Innerhalb des Schweißbrenners SB verläuft ein Kühlkanal 20 zur Führung einer Kühlflüssigkeit 3, der mit dem oben beschriebenen Schweißkomponenten-Kühlsystem 1 entsprechend verbunden wird. Der Kühlkanal 20 wird teilweise durch die oben erwähnten Bestandteile B1, B2, B3, B4 des Schweißbrenners SB gebildet. Darüber hinaus sind die Bestandteile B1, B2, B3, B4 miteinander verbunden, beispielsweise über einen Formschluss, Kraftschluss oder Stoffschluss. Somit wird eine elektrochemische Zelle über die im Kühlkanal 20 fließende Kühlflüssigkeit 3 gebildet. Durch eine Kühlflüssigkeit 3 mit hohem elektrischen Leitwert S begünstigt kommt es zu einer elektrochemischen Oxidation der Anode (Opferanode) und somit zu einer Zerstörung der betreffenden Bestandteile B1 und/oder B2 und/oder B4 des Schweißbrenners SB aus den elektrisch leitfähigen Materialien M1 und M2.

Dadurch, dass die Kühlflüssigkeit 3 gemäß der Erfindung deionisiert wird und einen sehr geringen elektrischen Leitwert S aufweist, können für die Bestandteile B1, B2, B4 des Schweißbrenners SB verschiedene elektrisch leitfähige Materialien M1, M2 verwendet werden, deren Standardpotentiale der elektrochemischen Spannungsreihe sich um mehr als 0,7 V unterscheiden. Wie weiter oben erwähnt, kann beispielsweise Aluminium (Standardpotential - 1,66 V) mit Silber (Standardpotential +0,8 V) kombiniert werden, was bei herkömmlichen wassergekühlten Schweißkomponenten SK nicht möglich war.

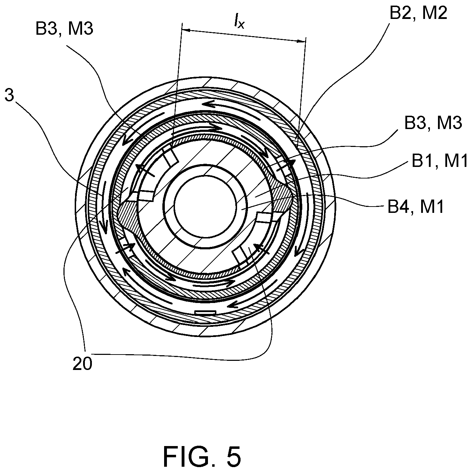

Schließlich zeigt Fig. 5 eine Detailansicht des Schweißbrenners SB gemäß Fig. 5 entlang der Schnittlinie A-A zur Veranschaulichung der Bestandteile B1, B2, B3, B4 im Bereich des Kühlkanals 20. Erfindungsgemäß sind die elektrisch leitfähigen Bestandteile B1, B2, B4 des Schweißbrenners SB derart angeordnet, dass die minimale Weglänge bzw. Flüssigkeitssäulenlänge lₘᵢₙ zwischen den Bestandteilen B1 bzw. B4 mit dem Bestandteil B2, durch den Kühlkanal 20 unter 12 mm, vorzugsweise unter 5 mm, beträgt. Die in der Fig. 5 eingezeichnete Distanz lₓ zeigt die von der Kühlflüssigkeit 3 zu überwindende Wegstrecke, wobei es sich bei der eingezeichneten Distanz lₓ quasi um die Luftlinie handelt, d.h. die tatsächliche Flüssigkeitssäulenlänge lₘᵢₙ ist durch die Ausführung des Kühlkanals 20 - die Kühlflüssigkeit 3 folgt dem Kühlkanal 20 und bildet somit eine Fließkurve - deutlich länger als die in Fig. 5 eingezeichnete Distanz lₓ. Die Herstellung eines Schweißbrenners SB mit einer oben erwähnten Flüssigkeitssäulenlänge lₘᵢₙ kleiner 12 mm, vorzugsweise kleiner 5 mm, war bei Verwendung herkömmlicher Kühlflüssigkeiten 3 nicht möglich.

Die vorliegende Erfindung verbessert die Kühlung der Schweißkomponenten SK sowie deren Lebensdauer und ermöglicht, wie anhand der Figuren 4 und 5 beschrieben, die Verwendung neuer Materialien und Materialkombinationen für die Bestandteile der Schweißkomponenten SK sowie neue Konstruktionen.

## Patentansprüche

1. Schweißkomponenten-Kühlsystem (1) zur Kühlung einer Schweißkomponente (SK), insbesondere eines Schweißbrenners (SB), mit zumindest einem Behälter (2) für Kühlflüssigkeit (3), einem Kühlkreislauf (4) mit entsprechenden Kühlleitungen (5), zumindest einer im Kühlkreislauf (4) angeordneten Pumpe (6) zur Förderung der Kühlflüssigkeit (3) durch die Kühlleitungen (5) im Kühlkreislauf (4), und zumindest einem in einer Kühlleitung (5) angeordneten Wärmetauscher (7), wobei im Kühlkreislauf (4) eine Einrichtung (8) zur Deionisierung der Kühlflüssigkeit (3) vorgesehen ist, **dadurch gekennzeichnet, dass** zumindest ein Sensor (14) zur Messung des Leitwerts (S) und zumindest ein Temperatursensor (16) zur Messung der Temperatur (T) der Kühlflüssigkeit (3) im Kühlkreislauf (4) sowie zumindest ein Sensor (15) zur Messung des Durchflusses (Q) der Kühlflüssigkeit (3) im Kühlkreislauf (4) angeordnet und jeweils mit einer Steuereinrichtung (17) verbunden ist, wobei die Steuereinrichtung (17) mit einer mit der Schweißkomponente (SK) verbundenen Schweißstromquelle (SQ) verbindbar ist.

2. Schweißkomponenten-Kühlsystem (1) nach Anspruch 1, **dadurch gekennzeichnet, dass** die Deionisiereinrichtung (8) durch einen Behälter (9) mit darin angeordnetem Mischbettharz (10) gebildet ist.

3. Schweißkomponenten-Kühlsystem (1) nach Anspruch 2, **dadurch gekennzeichnet, dass** das Mischbettharz (10) aus einer Mischung von Kationenharz und Anionenharz, vorzugsweise 40% Kationensalz und 60% Anionensalz besteht.

4. Schweißkomponenten-Kühlsystem (1) nach einem der Ansprüche 1 bis 3, **dadurch gekennzeichnet, dass** die Deionisiereinrichtung (8) in einer Kühlleitung (5) innerhalb des Kühlkreislaufes (4) angeordnet ist.

5. Schweißkomponenten-Kühlsystem (1) nach einem der Ansprüche 1 bis 3, **dadurch gekennzeichnet, dass** die Deionisiereinrichtung (8) in einem Bypass (11) zu einer Kühlleitung (5) innerhalb des Kühlkreislaufes (4) angeordnet ist.

6. Schweißkomponenten-Kühlsystem (1) nach einem der Ansprüche 2 bis 5, **dadurch gekennzeichnet, dass** der Behälter (9) mit dem Mischbettharz (10) einen zentralen Einlasskanal (12) und koaxial dazu außen einen Abflusskanal (13) aufweist.

7. Schweißkomponenten-Kühlsystem (1) nach einem der Ansprüche 1 bis 6, **dadurch gekennzeichnet, dass** im Kühlkreislauf (4) zumindest ein Filter (19) angeordnet ist.

8. Schweißkomponente (SK), insbesondere Schweißbrenner (SB), mit zumindest zwei miteinander verbundenen Bestandteilen (B1, B2) aus zumindest zwei elektrisch leitfähigen Materialien (M1, M2) und einem Kühlkanal (20) zur Führung einer Kühlflüssigkeit (3), welcher Kühlkanal (20) teilweise durch die zumindest zwei Bestandteile (B1, B2) gebildet ist, **dadurch gekennzeichnet, dass** ein Schweißkomponenten-Kühlsystem (1) nach einem der Ansprüche 1 bis 7 vorgesehen ist , dessen Kühlkreislauf (4) mit dem Kühlkanal (20) verbunden ist.

9. Schweißkomponente (SK), insbesondere Schweißbrenner (SB), nach Anspruch 8, **dadurch gekennzeichnet, dass** die zumindest zwei Bestandteile (B1, B2) aus verschiedenen elektrisch leitfähigen Materialien (M1, M2) gebildet sind, deren Standardpotentiale der elektrochemischen Spannungsreihe sich um mehr als 0,7 V unterscheiden.

10. Schweißkomponente (SK), insbesondere Schweißbrenner (SB), nach Anspruch 8 oder 9, **dadurch gekennzeichnet, dass** die zumindest zwei Bestandteile (B1, B2) derart angeordnet sind, dass die minimale Weglänge (lₘᵢₙ) zwischen den Bestandteilen (B1, B2) durch den Kühlkanal (20) unter 12 mm, vorzugsweise unter 5 mm, beträgt.

## Claims

1. Welding component cooling system (1) for cooling a welding component (SK), in particular a welding torch (SB), comprising at least one container (2) for cooling liquid (3), a cooling circuit (4) with corresponding cooling lines (5), at least one pump (6) arranged in the cooling circuit (4) for conveying the cooling liquid (3) through the cooling lines (5) in the cooling circuit (4), and at least one heat exchanger (7) arranged in a cooling line (5), wherein a device (8) for deionizing the cooling liquid (3) is provided in the cooling circuit (4), **characterized in that** at least one sensor (14) for measuring the conductance (S) and at least one temperature sensor (16) for measuring the temperature of the cooling liquid (3) is arranged in the cooling circuit (4) as well as at least one sensor (15) for measuring the flow rate (Q) of the cooling liquid (3) in the cooling circuit (4) and connected in each case to a control device (17), wherein the control device (17) can be connected to a welding current source (SQ) connected to the welding component (SK).

2. Welding component cooling system (1) according to Claim 1, **characterized in that** the deionizing device (8) is formed by a container (9) with mixed-bed resin (10) arranged therein.

3. Welding component cooling system (1) according to Claim 2, **characterized in that** the mixed-bed resin (10) consists of a mixture of cation resin and anion resin, preferably 40% cation salt and 60% anion salt.

4. Welding component cooling system (1) according to any one of Claims 1 to 3, **characterized in that** the deionizing device (8) is arranged in a cooling line (5) within the cooling circuit (4).

5. Welding component cooling system (1) according to any one of Claims 1 to 3, **characterized in that** the deionizing device (8) is arranged in a bypass (11) to a cooling line (5) within the cooling circuit (4).

6. Welding component cooling system (1) according to any one of Claims 2 to 5, **characterized in that** the container (9) with the mixed-bed resin (10) has a central inlet channel (12) and an external outlet channel (13) coaxial thereto.

7. Welding component cooling system (1) according to any one of Claims 1 to 6, **characterized in that** at least one filter (19) is arranged in the cooling circuit (4).

8. Welding component (SK), in particular welding torch (SB), comprising at least two components (B1, B2) connected to each other made of at least two electrically conductive materials (M1, M2) and a cooling channel (20) for guiding a cooling liquid (3), which cooling channel (20) is partially formed by the at least two components (B1, B2), **characterized in that** a welding component cooling system (1) according to any one of Claims 1 to 7 is provided, the cooling circuit (4) of which is connected to the cooling channel (20) .

9. Welding component (SK), in particular welding torch (SB), according to Claim 8, **characterized in that** the at least two components (B1, B2) are formed of different electrically conductive materials (M1, M2), of which the standard potentials of the electrochemical voltage series differ by more than 0.7 V.

10. Welding component (SK), in particular welding torch (SB), according to Claim 8 or 9, **characterized in that** the at least two components (B1, B2) are arranged in such a way that the minimum path length (lₘᵢₙ) between the components (B1, B2) through the cooling channel (20) is less than 12 mm, preferably less than 5 mm.

## Revendications

1. Système de refroidissement (1) de composants de soudage pour refroidir un composant de soudage (SK), en particulier une torche de soudage (SB), avec au moins un récipient (2) pour le liquide de refroidissement (3), un circuit de refroidissement (4) avec des conduites de refroidissement (5) correspondantes, au moins une pompe (6) disposée dans le circuit de refroidissement (4) pour transporter le liquide de refroidissement (3) à travers les conduites de refroidissement (5) dans le circuit de refroidissement (4), et au moins un échangeur de chaleur (7) disposé dans une conduite de refroidissement (5), un dispositif (8) de déionisation du liquide de refroidissement (3) étant prévu dans le circuit de refroidissement (4), **caractérisé en ce qu'**au moins un capteur (14) est disposé pour mesurer la conductance (S) et au moins un capteur de température (16) est disposé pour mesurer la température (T) du liquide de refroidissement (3) dans le circuit de refroidissement (4) ainsi qu'en ce qu'au moins un capteur (15) est disposé pour mesurer le débit (Q) du liquide de refroidissement (3) dans le circuit de refroidissement (4) et chaque capteur est relié à un dispositif de commande (17), le dispositif de commande (17) pouvant être relié à une source de courant de soudage (SQ) reliée au composant de soudage (SK).

2. Système de refroidissement (1) de composants de soudage selon la revendication 1, **caractérisé en ce que** le dispositif de déionisation (8) est formé par un récipient (9) avec une résine à couches mixtes (10) disposée à l'intérieur.

3. Système de refroidissement (1) de composants de soudage selon la revendication 2, **caractérisé en ce que** la résine à couches mixtes (10) est composée d'un mélange de résine cationique et de résine anionique, de préférence 40 % de sel de cation et 60 % de sel d'anion.

4. Système de refroidissement (1) de composants de soudage selon l'une quelconque des revendications 1 à 3, **caractérisé en ce que** le dispositif de déionisation (8) est disposé dans une conduite de refroidissement (5) à l'intérieur du circuit de refroidissement (4).

5. Système de refroidissement (1) de composants de soudage selon l'une quelconque des revendications 1 à 3, **caractérisé en ce que** le dispositif de déionisation (8) est disposé dans une dérivation (11) vers une conduite de refroidissement (5) à l'intérieur du circuit de refroidissement (4).

6. Système de refroidissement (1) de composants de soudage selon l'une quelconque des revendications 2 à 5, **caractérisé en ce que** le récipient (9) avec la résine à couches mixtes (10) présente un canal d'entrée (12) central et à l'extérieur coaxialement au dit canal, un canal d'évacuation (13).

7. Système de refroidissement (1) de composants de soudage selon l'une quelconque des revendications 1 à 6, **caractérisé en ce qu'**au moins un filtre (19) est disposé dans le circuit de refroidissement (4).

8. Composant de soudage (SK), en particulier une torche de soudage (SB) avec au moins deux éléments (B1, B2) reliés entre eux en au moins deux matériaux (M1, M2) électriquement conducteurs et avec un canal de refroidissement (20) pour guider un liquide de refroidissement (3), ledit canal de refroidissement (20) étant formé en partie par les aux moins deux éléments (B1, B2), **caractérisé en ce qu'**il est prévu un système de refroidissement (1) de composants de soudage selon l'une quelconque des revendications 1 à 7 dont le circuit de refroidissement (4) est relié au canal de refroidissement (20).

9. Composant de soudage (SK), en particulier une torche de soudage (SB) selon la revendication 8, **caractérisé en ce que** les au moins deux éléments (B1, B2) sont formés en différentes matériaux (M1, M2) électriquement conducteurs dont les potentiels standard de la gamme de tension électrochimique diffèrent de l'ordre de plus de 0,7 V.

10. Composant de soudage (SK), en particulier une torche de soudage (SB) selon la revendication 8 ou 9, **caractérisé en ce que** les au moins deux éléments (B1, B2) sont disposés de sorte que la longueur de course minimale (lₘᵢₙ) entre les éléments (B1, B2) à travers le canal de refroidissement (20) se monte à moins de 12 mm, de préférence à moins de 5 mm.
